# EUROPEAN PATENT APPLICATION

(11) **EP 1 048 252 A2**
(43) Date of publication of application: **02.11.2000**
(21) Application number: 00303647.2
(22) Date of filing: 28.04.2000
(51) Int. Cl.: A47F 13/08

(54) **A serving or dispensing scoop**

(30) Priority: 30.04.1999 GB 9909847
(71) Applicant: Powell, Stephen David, Banbury, Oxfordshire OX16 0UL (GB)
(72) Inventor: Powell, Stephen David, Banbury, Oxfordshire OX16 0UL (GB)
(74) Representative: Stanley, Michael Gordon

(57) **Abstract**

A variable capacity manual scoop (11) for dispensing particulate goods and having a hollow body (12) with a handle fixed (14) thereto and a partition (18) located in the hollow body. The body has an open front (13) and the partition (18) is set back from the open front (13) to form a open compartment (24) for the scooping up and dispensing a quantity of goods, the capacity of the compartment (24) being varied by alteration of the position of the partition relative to the body, preferably by relative rotation of the partition.

## Description

### Field

This invention relates to dispensing or serving scoops, in particular of the type used to serve portions of cooked foods.

### Background

Dispensing scoops are used in many different fields for dispensing portions off various solid materials, for example they may be used for serving portions of food at canteen serveries or fast food outlets, or for the dispensing of ingredients used in breweries , or food processing, or even in the chemical industry for the addition of components to batch processes.

By their nature scoops whilst dispensing approximate weights or volumes of materials do not accurately measure the quantities of materials. This is particularly so in food outlets where the volume of food served is largely at the whim of the person serving. There is a particular problem with open fronted scoops where the portion of food to be dispensed is different to the capacity of the scoop. The traditional scoop used for serving portions of fries or chips generally serves for both large and small portions , the amount being served being at the discretion of the person serving.

The present invention provides a scoop which can be used for different measured portions.

### Statement of Invention

According to the present invention there is provided a variable serving capacity manual scoop for dispensing particulate goods and having an open fronted hollow body with a handle fixed thereto and a partition located in the hollow body and set back from the open front to form a open fronted compartment for the scooping up of goods, the capacity of the open fronted compartment being varied by alteration of the relative position of the partition to the body.

The position of the partition may be altered incrementally to vary the capacity by small amounts to deliver a desired quantity of goods, and/or the partition may be displaced to alter the capacity of the scoop for serving a different quantities of goods, typically at least two different quantities. Preferably the partition is pivotally mounted to the body of the scoop and the capacity is varied by rotational movement of the partition relative to the body.

The angle of inclination of the partition may be controlled by means of a reciprocable rod pivotally connected to the partition and which extends from the partition to the handle, the angle of inclination being altered by linear movement of the rod relative to the handle. The rod has an adjustable overall length, preferably using a screw threaded adjuster means, for incremental adjustment of the angle of inclination of the partition relative to the body.

Alternatively, the rotational movement of the partition to increase the capacity of the compartment is limited by an adjustable stop means, and the maximum capacity of the open compartment is provided by rotation of the partition through an arc of at least 80 degrees, and preferably 90 degrees or more, opening said compartment adjacent the open front to the entire interior of the hollow body. This may increase the capacity of the scoop by a factor of at least one portion.

The body may be formed from sheet metal, preferably stainless steel, or from any suitable high melting point plastics material, for example nylon 66, or an aromatic polyamide. The body is preferably perforated to provide drainage holes for any cooking liquids such as fats, oils, or water. The scoop body may be formed at least in part from perforated metal sheet.

### Description of Drawings

The invention will be described by way of example and with reference to the following drawings in which:
- Fig. 1: is an isometric view of a scoop according to the present invention,
- Fig. 2: is a longitudinal cross section through the scoop of Fig.1, and
- Fig. 3: is a view of the control mechanism in the handle for movement of the partition,
- Fig. 4: is a second embodiment of the control mechanism for movement of the partition, and
- Fig. 5: is a longitudinal cross section through a another scoop also according to the present invention, and
- Fig. 6: is a section on the line VI-VI of Fig. 5.

### Detailed description of the Invention

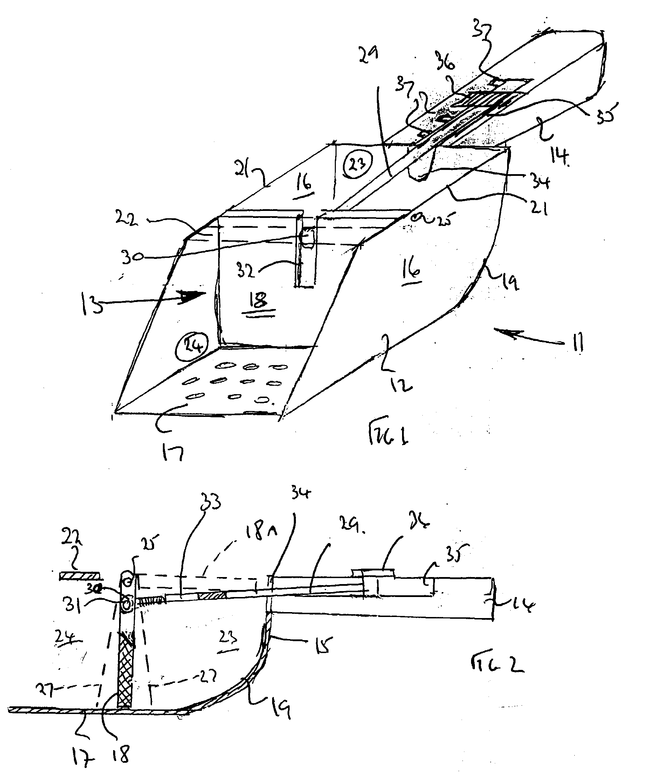

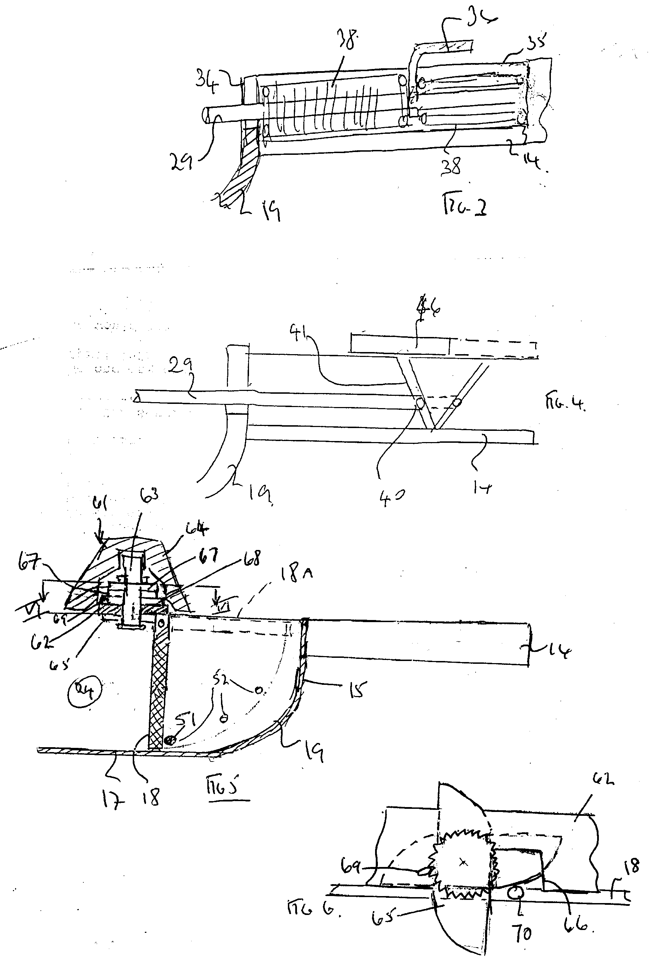

With reference to Figures 1 to 3 of the drawings the invention relates to an open fronted scoop 11 of the type used for manually dispensing particulate matter such as grain, pulses, chips, fries etc.. The scoop has a hollow cuboid body 12 with sidewalls 16, base 17, rear wall 15, and an open front 13. A handle 14 is secured to the rear wall 15 . The side wall 16 are substantially flat and rhomboid in shape with the lower edge projecting forwards so that the base 17 protrudes forwardly which assists in the scooping action. The base 17 and rear wall 15 are connected by a convex arcuate portion 19 which allow the front of the scoop 11 to be tipped upwardly on filling when the scoop is used for goods standing on a flat surface.

The front portions of the upper sidewall 16 may be interconnected by a bridge 22 which serves to strengthen the body 12, and also to prevent overfilling of the scoop. The hollow interior of the body 12, as shown in Fig. 1, is divided into two compartments , a rear compartment 23, and a front compartment 24, by a partition or flap 18. The flap 18 is pivoted at its upper edge portion by a elongated pin 25, or alternatively by a pair of pins located one at each end of the flap, which is/are mounted to the sidewall 16. The flap is moveable by rotation about the pin 25.

The inclination of the flap 25 may be set to vary the volume or capacity of the front compartment 24. The flap 18 in a closed condition as shown in Fig. 2, may be adjusted incremental by means of a screw threaded adjuster 33 on a control rod 29 so that the capacity of the front compartment 24 may be accurately set to deliver a substantially constant known weight portion. The flap 18 may be set to a particular inclination relative to the body 12 between limits shown by dotted lines 27.

The flap 18 may also be rotated by means of the control rod 29 to vary the capacity of the scoop and hence the quantity of goods served. The flap 18 may be rotated anticlockwise through between 70-90 degrees of arc and raised to an open condition to lie substantially parallel to the base 17, as shown in dotted outline a. With the flap in the fully open condition, the front and rear compartments 24,23 are fully interconnected allowing at least two different portions or weights of goods to be served or dispensed by the same scoop. The flap 18 may also be rotated clockwise for say unto 20 degrees of arc to reduce the serving capacity of the front compartment 24.

The control rod 29 is attached via a coupling 30 to a pivot pin 31 located in a central slot 32 below the pivotal axis of the flap relative to the sidewalls 16. The base of the slot may be inclined to give maximum clearance for the rod 29 when the flap is raised. The coupling 30 is attached to the rod 29 through the screw threaded adjuster 33. The adjuster 33 allows the overall length of the control rod to be varied to set the flap 18 to a desired inclination relative to the body 12 in the closed condition.

The control rod 29 passes through a slot 34 in the rear wall 15 and into an elongated groove 35 in the handle 14. The rod is connected to a button 36 which is slidable along the groove and can be locked in spaced apart set positions along the groove. The button 36 is engagable in notches 37 spaced along the edge of the groove at graduated intervals to lock the button at the various positions. The button is biased towards a neutral point, preferably the closed position by resilient members, preferably a compression springs 38 coaxial with the rod 29 and acting between the button 36 and ends of the groove 35.

The button 36 may be slid along the groove to move the control rod 29 to set the flap 18 so that the scoop may serve three different portions, one portion with the flap 18 pivoted fully forward, a second portion with the flap pivoted in or near the neutral position, and a third portion with the flap fully open.

In a second embodiment of the invention, shown in Fig 4, the control rod 29 is connected through a hinge or pivot pin 40 to a lever 41 in turn connected to a button 46 at its upper end and pivoted against the base of the groove 35 at its other end. Linear movement of the button simply moves the lever backwards and forwards. A linear movement of the rod of about 10-15mm will provide for a full arc of movement for the flap 18. Springs may act against the opposite faces of the lever 41 to help return the button 46 to a neutral position.

In an alternative embodiment shown in Figs. 5 & 6, the capacity of the front compartment 24 may be varied simply by limiting the anticlockwise rotation of the flap 18. This can achieved by the use of at least one stop pin 51 which is insertable in a series of circumferentially spaced holes 52 arranged in the arc of rotation of the flap in at least one side wall 16. Without the insertion of a pin 51 in a respective hole 52 the flap 18 can fully open as shown at 18A allowing the use of the entire hollow interior of the body.

The rotational movement may also be alternatively or additionally limited by a control 61 located on a bridge 62 interconnecting the two side walls 16. The control 61 comprises a pin 63 accommodated in a hole in bridge with the head of the pin located beneath the bridge. A four arm star washer 65 is mounted on the pin 63 between its head of and the underside of the bridge, and a ratchet wheel 68 and spacers 67 are mounted on the pin 63 on the upper side of the bridge. A knob 64 is fitted to the end of the pin 61 for rotation of the control. The ratchet wheel 68 is engagable with a boss or pin 69 on the bridge to permit rotation of the control 61 in one direction only.

The partition or flap 18 has a projection 70 (see Fig 6 only) which is moveable in a notch 66 in the bridge 62 as the flap rotates. The arms of the star washer 65 sweep across a notch 66 in the bridge, and the movement of the flap is limited by abutment of the projection 70 against the edge of an arm of the star washer.

The ratchet wheel permits the knob 64 to be turned in one direction only and graduations on the knob can be matched against marks on the bridge. Four arms on the star washer allows for capacity of the scoop varied through four sets of settings per rotation of the knob.

## Claims

1. A variable capacity manual scoop (11) for dispensing particulate goods and having a hollow body (12) with a handle (14) fixed thereto and a partition (18) located in the hollow body characterized in that the body has an open front (13) and the partition (18) is set back from the open front (13) to form a open fronted compartment (24) for the scooping up and dispensing a quantity of goods, the capacity of the open fronted compartment (24) being varied by alteration of the relative position of the partition (18) to the body.

2. A scoop as claimed in Claim 1, wherein the position of the partition (18) may be altered incrementally by adjustment means (33) to vary the capacity of said compartment (24) by small amounts to deliver a desired quantity of goods.

3. A scoop as claimed in Claim 1 or Claim 2, wherein the partition (18) is displaceable to increase the size of the compartment (24) for dispensing at least two different quantities of goods.

4. A scoop as claimed in any one of Claims 1 to 3, wherein the partition (18) is pivotally mounted to the body (12) of the scoop (11) and the capacity of said compartment (24) is varied by rotational movement of the partition (18) relative to the body (12).

5. A scoop as claimed in Claim 4, wherein the angle of inclination of the partition (18) is controlled through a reciprocable rod (29) pivotally connected thereto and which extends from the partition (18) to the handle (14), the angle of inclination being altered by linear movement of the rod (29) relative to the handle (14).

6. A scoop as claimed in claim 5 when dependant upon Claim 2 , wherein the overall length of the rod (29) is adjustable to vary the angle of inclination of the partition relative to the body.

7. A scoop as claimed in Claim 4, wherein the rotational movement of the partition (18) to increase the capacity of the said compartment (24) is limited by adjustable stop means.

8. A scoop as claimed in any one of Claims 4 to 7, wherein the maximum capacity open fronted compartment (24) is provided by rotation of the partition (18) through about 90 degrees opening said compartment (24) to the entire interior of the hollow body (12).

9. A scoop as claimed in any one of claims 1 to 8, wherein the scoop (11) is substantially rhomboid having an inclined open front face (13), and an arcuate rear face (19) adjacent the handle (14).

10. A scoop as claimed in any one of Claims 1 to 9 wherein the scoop body (12) is perforated to allow drainage through the body.
